# EUROPEAN PATENT APPLICATION

(11) **EP 4 783 274 A1**
(43) Date of publication of application: **29.07.2026**
(21) Application number: 24897907.2
(22) Date of filing: 29.10.2024
(51) Int. Cl.: H01M 10/04, B65G 47/80, B65G 47/90, B65G 59/04, B65G 57/04, B65G 21/20

(54) **UNIT CELL TRANSFER APPARATUS FOR SECONDARY BATTERY, MANUFACTURING APPARATUS COMPRISING SAME, AND SECONDARY BATTERY MANUFACTURING METHOD**

(30) Priority: 28.11.2023 KR 20230167463
(71) Applicant: LG Energy Solution, Ltd., Seoul 07335 (KR)
(72) Inventor: KIM, Jung Won, Daejeon 34122 (KR); KEUM, Dong Yeon, Daejeon 34122 (KR); BAEK, Ju Hwan, Daejeon 34122 (KR); SO, Hee Young, Daejeon 34122 (KR); LEE, Hee Moon, Daejeon 34122 (KR); JEONG, Do Hwan, Daejeon 34122 (KR)
(74) Representative: Goddar, Heinz J.
(86) International application number: PCT/KR2024/016607
(87) International publication number: WO 2025/116310

(57) **Abstract**

The present invention relates to a unit cell transfer device and a lamination device, and more specifically, relates to a unit cell transfer device capable of stably transferring and laminating unit cells, and a secondary battery manufacturing device comprising the same.

According to one example of the present invention, it is possible to provide a secondary battery unit cell transfer device comprising a plurality of adsorption modules adsorbing unit cells; a circulation track on which the adsorption modules are circulated and moved; a pusher module moving the adsorption modules downward relative to the circulation track; and a control part releasing adsorption of the adsorption modules so that the unit cells are separated from the adsorption modules and laminated after downward movement of the adsorption modules.

## Description

### Technical Field

The present invention relates to a unit cell transfer device and a lamination device, which relates, more specifically, to a unit cell transfer device capable of stably transferring and laminating unit cells, and a secondary battery manufacturing device comprising the same and a manufacturing method thereof.

### Background Art

Generally, as the supply of portable small electrical and electronic devices is spread, development of new type secondary batteries such as nickel-metal hydride batteries or lithium secondary batteries is actively underway. Recently, lithium secondary batteries have been widely used for automobiles as well as power tools.

The lithium secondary battery means a battery using carbon such as graphite as a negative electrode active material, a lithium containing oxide as a positive electrode material, and a non-aqueous solvent as an electrolyte.

Such a secondary battery is manufactured in the form of a battery assembly by accommodating an electrode assembly, in which a positive electrode, a separator, and a negative electrode are sequentially measured, in an exterior material such as a pouch or a cylindrical can. Thereafter, a process of injecting the electrolyte into the battery assembly using an electrolyte injection device is performed.

For manufacture of electrode assemblies, lamination methods are very various. Representatively, they can be classified into a jelly-roll (rollable) electrode assembly having a structure in which long sheet-shaped positive electrodes and negative electrodes are rolled up in a state where a separator is interposed therebetween, a stacked (laminated) electrode assembly in which a plurality of positive electrodes, a plurality of separators, and a plurality of negative electrodes, which are cut into units of a predetermined size, are sequentially laminated, and a stack/folding electrode assembly laminated by repeating a process of laminating unit positive electrodes or negative electrodes on a long sheet-shaped separator, and then folding the separator.

The stacked electrode assembly may also be formed by repeatedly laminating a unit positive electrode, a unit separator, and a unit negative electrode multiple times, and may also be formed by stacking them in the form of a unit cell, and then laminating a plurality of unit cells. In this instance, the unit cell means a form in which the unit separator, and the unit positive electrode and/or the unit negative electrode are laminated, which may also be called a semi-product.

As one example, the unit cell in which the unit separator, the unit positive electrode, the unit separator, and the unit negative electrode are laminated may be called a mono-cell, and the unit cell in which the unit separator, the unit positive electrode, and the unit separator are laminated may be called a half-cell. Of course, in the mono-cell, the order of the positive electrode and the negative electrode may be changed, and in the half-cell, the negative electrode may be laminated instead of the positive electrode. The electrode assembly may be manufactured by manufacturing, first, a mono-cell and half-cells, and laminating multiple mono-cells, and then finally laminating the half-cells.

In the case of manufacturing such a unit cell and then laminating multiple unit cells, there is an advantage capable of providing sufficient adhesive force between the separator and the positive electrode, and between the separator and the negative electrode, and there is an advantage that lamination efficiency improvement and lamination reliability improvement are possible.

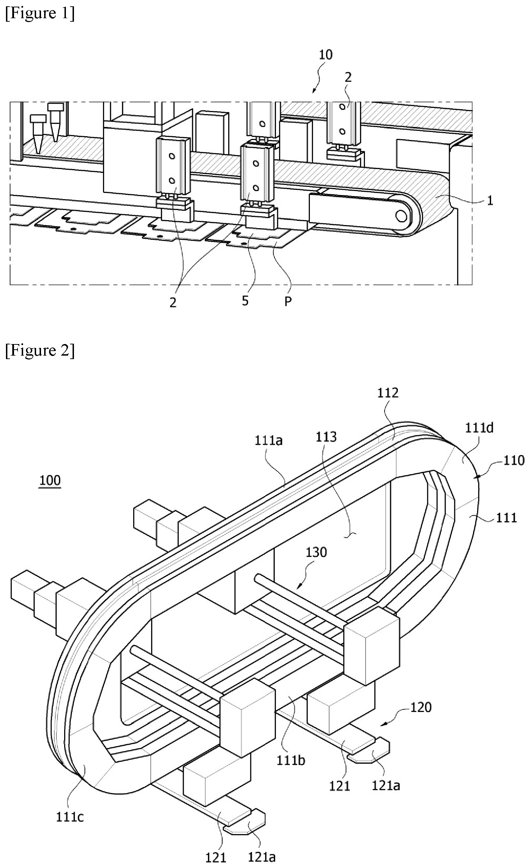

Figure 1 illustrates one example of a conventional unit cell transfer device (10).

The pre-manufactured unit cell is introduced into a conveyor belt (1) and then transferred. The conveyor belt (1) may be provided so that the unit cell (5) is adsorbed and transferred. The unit cell (5) adsorbed on the upper portion of the conveyor belt (1) is transferred, thereby being flipped upside down and transferred to a lamination position. That is, when the unit cell (5) is positioned on the upper portion of a pallet (P) on which the unit cell (5) is laminated, a pusher (2) pushes the unit cell (5) from the top to the bottom. The pusher (2) is provided on both width direction sides of the conveyor belt (1), thereby directly striking both ends of the unit cell (5) that are not in contact with the conveyor belt (1).

The unit cell struck by the pusher falls freely, and multiple unit cells are sequentially laminated by repetition of this free fall, whereby the electrode assembly is manufactured. Therefore, there is a problem that process capability is lowered due to the distortion of the unit cells, and the like. This is because the unit cell may be displaced from the correct position or distorted due to impact during a landing process after being dropped. In addition, there is a problem that after defective lamination of unit cells, the defective unit cells cannot be discharged in the laminating process. This is because there is no means capable of recovering and discharging defectively laminated unit cells fallen from the conveyor belt (1). Therefore, if the unit cells are laminated defectively, the entire final electrode assembly cannot help but be defective, so that the process efficiency can be lowered.

Therefore, it is necessary to provide a unit cell transfer device capable of effectively and continuously performing a pickup process for introducing unit cells, a laminating process for laminating unit cells, and a discharge process for returning defective unit cells, and a lamination device or manufacturing device comprising the same. In addition, it is necessary to provide an effective manufacturing method using such a device.

### Disclosure

### Technical Problem

It is an object of the present invention to solve a problem in which unit cells are laminated by falling.

Through one example of the present invention, it is intended to provide a unit cell transfer device and a manufacturing device capable of laminating unit cells after lowering them to a lamination position.

Through one example of the present invention, it is intended to provide a unit cell transfer device and a manufacturing device capable of picking up and then discharging defectively laminated unit cells immediately after laminating them.

Through one example of the present invention, it is intended to provide a unit cell transfer device and a manufacturing device that pickup and lamination can be performed continuously by picking up unit cells to be laminated in a pickup region and laminating unit cells in a laminating region.

Through one example of the present invention, it is intended to provide a manufacturing method for manufacturing a secondary battery effectively and efficiently by eliminating fall of unit cells upon lamination.

### Technical Solution

To achieve the above-described objects, according to one example of the present invention, it is possible to provide a secondary battery unit cell transfer device comprising a plurality of adsorption modules adsorbing unit cells; a circulation track on which the adsorption modules are circulated and moved; a pusher module moving the adsorption modules downward relative to the circulation track; and a control part releasing adsorption of the adsorption modules so that the unit cells are separated from the adsorption modules and laminated after downward movement of the adsorption modules.

The unit cell transfer device may be a partial constitution of a unit cell lamination device, and may be a partial constitution of a secondary battery manufacturing device.

The plurality of adsorption modules may be provided to move along the circulation track at a predetermined interval.

The above-described plurality of adsorption modules may be controlled to move along the circulation track simultaneously and stop simultaneously.

The pusher module may be provided to move only a specific adsorption module among the plurality of adsorption modules downward.

The pusher module may be provided in a plurality of modules, and their positions may be fixed. That is, they may be operated so that only the adsorption modules moved to the positions where the relevant pusher modules are provided move downward.

It is preferable that the control part individually controls the plurality of adsorption modules to enable adsorption and adsorption release.

The circulation track may be composed of an upper linear section and a lower linear section facing each other in the gravity direction, and left and right curved sections connecting the upper linear section and the lower linear section. That is, the circulation track may be provided in the form of 90-degree erection so that the lower linear section forms a floor surface.

The circulation track may comprise a track-shaped main body, a rail formed on the main body, and a moving device moving along the rail.

The adsorption module may comprise a connecting member connected to the moving device to move integrally with the moving device. As the moving device moves, the adsorption module may also move, and when the moving device stops, the adsorption module may also move. Therefore, the adsorption module may repeat movement and stop with a certain pitch.

The adsorption module may comprise an adsorption plate formed on a lower surface to vacuum-adsorb the upper surface of the unit cell. The adsorption plate may move downward from the upper portion of the unit cell to adsorb the unit cell. Then, the adsorption plate may release the unit cell adsorption after moving downward.

It is preferable that the adsorption plate is positioned to be further extended to both sides in the thickness plane of the main body of the circulation track.

It is preferable that an opening penetrating the main body is formed, and the pusher module is positioned on both sides of the opening, and provided to press both sides of the adsorption module.

The adsorption module may comprise a transparent extension plate provided on both ends of the adsorption plate and provided to cover both ends of the unit cell. Therefore, it is possible to photograph both ends of the unit cell covered with the transparent extension plate from the top through a vision.

It is preferable that the adsorption module comprises a guide plate connected to the connecting member, and an elevating guide guiding uniform elevation of both ends of the adsorption plate is provided between the guide plate and the adsorption plate.

The pusher module may be provided to push the adsorption module downward on both sides of the adsorption module. At this time, both ends of the adsorption module may not move downward evenly. Therefore, the elevating guide may allow both ends of the adsorption module to move downward evenly.

The pusher module may comprise a rotation cam, a rotation axis of the rotation cam, and a drive motor driving the rotation axis.

It is preferable that the rotation cam is provided on both sides of the rotation axis, and provided to simultaneously press the adsorption module downward from the upper portions of both sides of the adsorption module.

To achieve the above-described objects, according to one example of the present invention, it is possible to provide a lamination device or manufacturing device comprising the unit cell transfer device.

According to one example of the present invention, a secondary battery manufacturing device may be provided, which comprises: a unit cell manufacturing device for manufacturing a unit cell with a positive electrode, a separator, and a negative electrode; a unit cell lamination device for manufacturing an electrode assembly by laminating unit cells manufactured from the unit cell manufacturing device; and a unit cell introduction device for transferring the unit cells manufactured from the unit cell manufacturing device to introduce them into the unit cell lamination device.

The unit cell introduction device may be provided between the unit cell manufacturing device and the unit cell lamination device.

The unit cell lamination device may comprise a circulation track provided so that a plurality of adsorption modules circulates, and having a laminating region preset in a lower linear section; a pusher module moving the adsorption module downward in the laminating region; and a control part releasing adsorption of the adsorption modules so that the unit cells are separated from the adsorption modules and laminated after downward movement of the adsorption modules.

It is preferable that the circulation track is composed of the lower linear section, an upper linear section facing the lower linear section, and left and right curved sections connecting the lower linear section and the upper linear section.

The plurality of adsorption modules may be provided to move along the circulation track while having the same interval from each other.

A pickup region (location) distinct from the laminating region (location) may be preset in the lower linear section of the circulation track. A laminating process may be performed through the adsorption module located in the laminating region, and a pickup process may be performed through the adsorption module located in the pickup region.

A discharge region distinct from the laminating region and the pickup region may be preset in the lower linear section of the circulation track. When the adsorption module adsorbing the unit cell to be discharged has been positioned in the discharge region, a discharge process may be performed.

The pusher module may be provided with a plurality of modules, and may be provided in the laminating region and the pickup region, respectively. The pusher module may also be provided in the discharge region. Like the laminating process, the pusher module may lower the adsorption module, and the unit cell may be discharged after the adsorption release.

It is preferable that the unit cell introduction device is provided to extend to the pickup region of the circulation track, which is the inside of the unit cell lamination device.

It is preferable that the discharge region, the laminating region, and the pickup region are preset, or the pickup region, the laminating region, and the discharge region are preset, sequentially along the movement direction of the adsorption module in the lower linear section of the circulation track.

To achieve the above-described objects, according to one example of the present invention, a secondary battery manufacturing method may be provided, which is characterized by comprising: an adsorption step in which an adsorption module moving along a circulation track adsorbs a unit cell at an adsorption position; and a lamination step in which the adsorption module that has adsorbed the unit cell moves along the circulation track, thereby laminating the unit cell at a lamination position, wherein in the lamination step, the adsorption module descends, thereby laminating the adsorbed unit cell and then releasing the adsorption, and ascends, thereby completing the lamination.

The adsorption step is a step of picking up a unit cell that is a laminating target, so that it can be called a pickup step. The step of picking up a defective unit cell after lamination can also be called a pickup step. Therefore, both steps can be divided into a unit cell pickup step and a defective cell pickup step. In addition, the defective cell pickup step can also be called a re-adsorption step or a re-adsorption process.

It is preferable that the circulation track is provided with a plurality of adsorption modules, and the entire plurality of adsorption modules repeats movement and stop at a constant pitch.

The movement of the adsorption module may mean that the adsorption module moves to a pickup position, a lamination position, and a discharge position, and it is preferable that a specific step or process is performed at a specific position. Therefore, the movement of all the adsorption modules can be called a transfer step, and the stop of all the adsorption modules can be called a stop step. In the stop step, the adsorption step, the lamination step, the re-adsorption step, and the discharge step may be performed simultaneously in the designated regions.

Also, in the stop step, it is preferable that the adsorption module does not move along the circulation track, but relative upward or downward movement is performed on the circulation track. As one example, the downward movement of the adsorption module may be performed for adsorption, re-adsorption, or lamination, and then the adsorption module may rise for returning to the original position. In addition, it is preferable that a vacuum adsorption time point, an adsorption maintenance period, and an adsorption release time point in each adsorption module are appropriately controlled depending on the position and time of the adsorption module.

Therefore, the adsorption step and the lamination step may be performed simultaneously based on one circulation track. In addition, the unit cell caused by laminating defects may be picked up immediately after the lamination step, and then the unit cell may be discharged at the discharge position.

### Advantageous Effects

Through one example of the present invention, it is possible to provide a unit cell transfer device and a manufacturing device capable of laminating unit cells after lowering them to a lamination position.

Through one example of the present invention, it is possible to provide a unit cell transfer device and a manufacturing device capable of picking up and then discharging defectively laminated unit cells immediately after laminating them.

Through one example of the present invention, it is possible to provide a unit cell transfer device and a manufacturing device that pickup and lamination can be performed continuously by picking up unit cells to be laminated in a pickup region and laminating unit cells in a laminating region.

Through one example of the present invention, it is possible to provide a manufacturing method for manufacturing a secondary battery effectively and efficiently by eliminating fall of unit cells upon lamination.

### Description of Drawings

Figure 1 illustrates one example of a conventional unit cell transfer device (lamination device),
Figure 2 illustrates one example of a unit cell transfer device according to one example of the present invention,
Figure 3 is a side view of a unit cell transfer device according to one example of the present invention,
Figure 4 is an enlarged side view of an adsorption module of a unit cell transfer device according to one example of the present invention,
Figure 5 is an enlarged view of a pressing structure of a unit cell transfer device according to one example of the present invention,
Figure 6 is a bottom view of an adsorption surface of a unit cell transfer device according to one example of the present invention,
Figure 7 is a simplified plan view of a unit cell lamination device according to one example of the present invention, and
Figure 8 is a simplified front view of a unit cell lamination device according to one example of the present invention.

### Best Mode

Hereinafter, with reference to the attached drawings, a unit cell transfer device according to one example of the present invention will be described in detail.

Figure 2 illustrates one example of a unit cell transfer device according to one example of the present invention.

The transfer device (100) may comprise a circulation track (110), an adsorption module (120), and a pusher module (130).

The circulation track (110) may comprise a main body (111), where the circulation track and the main body may be formed in a track shape.

The circulation track (110) may comprise two straight sections (111a, 111b) and two curved sections (111c, 111d), which face each other. The straight sections may comprise an upper linear section (111a) and a lower linear section (111b), and the curved sections may comprise a left curved section (111c) and a right curved section (111d), which connect the straight sections. The straight sections and the curved sections are continuously connected to each other to form one track shape. That is, it is preferable that the circulation track (110) is a shape in which two straight sections are erected to face each other up and down. That is, the circulation track (110) is disposed vertically without being disposed horizontally.

A rail (112) may be formed on the main body (111). That is, the rail (112) may be formed in the thickness portion of the main body. Therefore, the rail itself may also be formed in a track shape.

An opening (113) may be formed in the center of the main body. That is, an empty space may be formed, so that the main body (111) may have a track-type donut shape with an empty center. A pusher module (130) may be provided by passing through the opening (113).

A plurality of adsorption modules (120) may be provided on the circulation track (110). The adsorption module (112) may be provided to move along the circulation track (110). More specifically, it may be provided to move along the rail of the circulation track (110). The plurality of adsorption modules may be provided to have a predetermined interval or pitch from each other.

Each adsorption module (120) may comprise an adsorption plate (121). The adsorption plate (121) is provided so that the unit cell is adsorbed and fixed. That is, the adsorption plate (121) may adsorb and fix the unit cell, thereby transferring it to a specific position, and the relevant process may be performed at the specific position.

The adsorption plate (121) may be formed smaller than the unit cell. As one example, if the unit cell has a rectangular shape with long left and right sides, the adsorption plate (121) may also have a rectangular shape with long left and right sides. Here, the unit cell is preferably adsorbed and fixed in the center of the adsorption plate (121), but the left-right length of the adsorption plate (121) is preferably shorter than the left-right length of the unit cell. Since the inside of the adsorption plate (121) is provided with a vacuum tube constitution, it is not easy to make the adsorption plate (121) transparent in whole. Therefore, it is preferable that a transparent extension plate (121a) is provided at both ends of the adsorption plate (121).

The transparent extension plate (121a) is not provided with an adsorption function, but may only perform a role of pressing both ends of the unit cell upon laminating. In addition, the transparent extension plate (121a) may be provided to cover both ends of the unit cell, especially, a part of an electrode terminal and a terminal of an electrode tab. In other words, a part of the electrode terminal and the electrode tab may be visibly exposed from the upper portion of the transparent extension plate (121a). As described below, it is possible to determine whether the unit cell lamination is appropriate through such a transparent extension plate (121a).

When the adsorption module (120) moves in the lower linear section (111b), its adsorption surface faces downward, and when it moves in the upper linear section (111a), its adsorption surface faces upward. Of course, it can be regarded that the adsorption surface is flipped up and down and the unit cell is also flipped up and down, as the adsorption module (120) moves in two curved sections (111c, 111d).

The adsorption module (120) moves while circulating along the circulation track, and performs a specific process at a specific position.

The unit cell transfer device (100) according to the present example may perform multiple processes.

First, the unit cell transfer device may perform a pickup process of holding a unit cell. The pickup process is a process in which it is provided with a unit cell to perform a laminating process. Here, the pickup process may be referred to as a process of actively or proactively holding a unit cell without being passively provided with a unit cell. The unit cell may be moved to the transfer device through the pickup process. The pickup process may be performed by adsorbing and fixing the unit cell after the adsorption module (120) moves to the pickup position.

The unit cell transfer device may perform a transfer process of moving the adsorption module (120). That is, after it picks up a unit cell through a specific adsorption module (120), it may transfer the unit cell to a position where another process is performed. Such a transfer process may be performed by moving the adsorption module (120) along the circulation track.

The unit cell transfer device may perform a laminating process of laminating a unit cell. After a unit cell is transferred to a lamination position, it may laminate the unit cell by separating the unit cell from the adsorption module (120).

The unit cell transfer device may perform a re-adsorption process of picking up defective unit cells as well as picking up unit cells for lamination. Here, since the re-adsorption is performed after the lamination, a re-adsorption position may be the same as the lamination position.

Finally, the unit cell transfer device may perform a discharge process of discharging the re-adsorbed defective unit cell from a discharge position.

Eventually, according to the present example, the adsorption module (120) moves along the circulation track, where relevant processes may be performed sequentially at the pickup position, the discharge position, and the lamination position (re-adsorption position).

The adsorption module (120) may be provided to be movable in the normal direction of the circulation track (110). Particularly, the adsorption module (120) may be provided to be movable downward in the lower linear section (111b). Of course, while the connection between the adsorption module (120) and the circulation track (110) is maintained, the adsorption module (120) may be vertically moved downward to be away from the main body (111).

Here, the movement of the adsorption module (120) along the circulation track (110) may be referred to as linear movement or circular movement, and the movement of the adsorption module (120) away from the circulation track (110) may be referred to as downward movement.

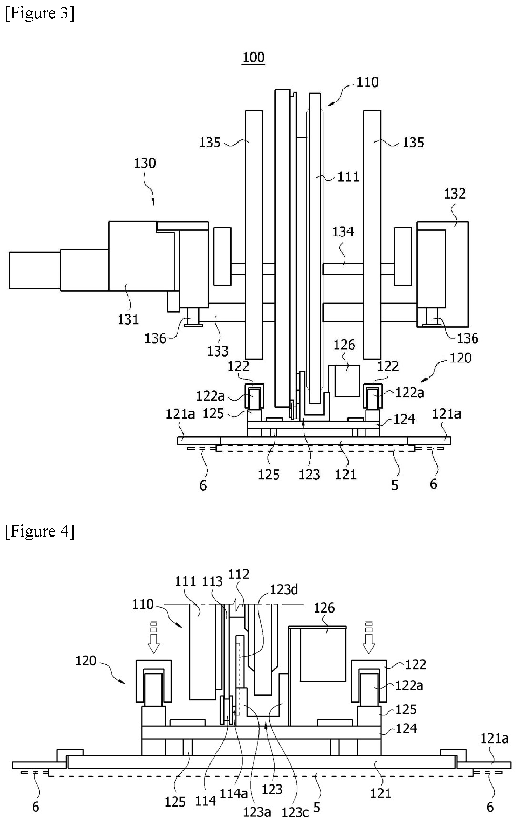

A moving device (113, see Figure 4) such as a belt, a chain, a wire, or a gear is provided to move on the rail of the circulation track (110), and as the moving device moves, the adsorption module (120) connected to the moving device moves together with the moving device, whereby the linear movement or circular movement of the adsorption module (120) may be implemented. Depending on the shape of the moving device, the connection structure of the moving device and the adsorption module (120) may be variously modified.

The downward movement may be performed at a specific position and in a specific case. The means for generating this downward movement may be referred to as a pusher module (130). The pusher module (130) pushes or presses the adsorption module (120), whereby the adsorption module (120) may perform the downward movement.

The downward movement of the adsorption module (120) may be performed in various processes. The adsorption module may be provided so that the unit cell is adsorbed and fixed through a vacuum pressure. Therefore, the adsorption module (120) may move vertically in the pickup process. That is, after the adsorption module (120) moves vertically toward the unit cell placed at a position spaced apart from the adsorption module (120), and the adsorption module (120) and the unit cell come into contact, the unit cell may be adsorbed and fixed to the adsorption module (120) through vacuum adsorption. After the pickup, the adsorption module (120) returns to the original position and moves along the circulation track (110).

If the unit cell after lamination is defective or the unit cell is not laminated in the correct position, the adsorption module (120) may also be moved downward in the re-adsorption process of re-adsorbing the unit cell. In the pickup process and the re-adsorption process, the adsorption module (120) performs adsorption after the downward movement.

After the unit cell after the pickup moves to the lamination position, the adsorption module (120) may move downward. At this time, the adsorption may be maintained, and after the unit cell is in contact with a laminating pallet or the upper surface of the previously laminated unit cell, the adsorption may be released. That is, the unit cell may be moved to the laminating height through the downward movement. This may be called lamination by contact rather than lamination by free fall of the unit cell. Therefore, distortion upon lamination may be minimized and lamination shock may be minimized.

The adsorption module (120) may likewise be moved downward in the discharge process of discharging the re-adsorbed unit cell. In the laminating process and the discharge process, the adsorption module (120) performs adsorption release after the downward movement. Of course, the downward movement may be omitted in the discharge process. Then, the upward movement, in which the adsorption module returns to the original position after the downward movement, will be performed.

Meanwhile, the pickup process, the re-adsorption process, the laminating process, and the discharge process as described above may all be performed when the relevant adsorption module (120) is positioned in the lower linear section (111b). That is, the pickup position, the re-adsorption position, the lamination position, and the discharge position may be preset along the lower linear section (111b). Of course, the re-adsorption position may be the same as the lamination position.

Here, the pusher module (130) causing the downward movement of the adsorption module (120) may also be in the form of a cylinder, and may also be in the form of a cam. The pusher module (130) may be referred to as a constitution for moving the adsorption module (120) from the original position to a separation position by supplying force and displacement.

In the case of a cylinder-shaped pusher module, the force or displacement provided while the adsorption module (120) moves from the original position to the separation position may be constant. Therefore, a large force may be applied to the unit cell when the unit cell adsorbed by the adsorption module (120) has reached the separation position.

On the other hand, in the case of a cam-shaped pusher module, the force or displacement provided while the adsorption module (120) moves from the original position to the separation position may change. Particularly, it may allow the unit cell to be laminated very smoothly and stably just before and when the unit cell adsorbed by the adsorption module (120) reaches the separation position.

Therefore, it is preferable that the pusher module (130) according to the present example is provided in the form of a cam.

Hereinafter, a structure or mechanism for the downward movement of the adsorption module (120) will be described in more detail with reference to Figures 3 and 4.

The adsorption module (120) comprises an adsorption plate (121) adsorbing the unit cell, and the unit cell (5) is adsorbed and fixed on the lower surface of the adsorption plate (121). That is, the lower surface of the adsorption plate (121) may be referred to as an adsorption surface. The adsorption plate (121) may be provided to correspond to the planar shape of the unit cell (5).

A transparent extension plate (121a7) is provided on both ends of the adsorption plate (121), and the transparent extension plate (121a) covers a portion of the terminal (shoulder portion) of the unit cell (5) and an electrode tab (6). A vision device (136) may be provided on the upper portion of the transparent extension plate (121a). The electrode tabs (6) on both sides and the corner of the unit cell (5) may be photographed through the vision device (136). That is, an image may be obtained through the vision device (136) by penetrating the transparent extension plate (121a). Through the acquired image, it is possible to determine whether the unit cell (5) is adsorbed at a desired position and/or whether it is laminated at a desired position using the vision device (136).

The adsorption module (120) may comprise a connecting member (123). The connecting member (123) may be referred to as a constitution connecting the circulation track (110) and the adsorption module (120). A part of the connecting member (123) may be connected to the circulation track (110) and another part may be directly or indirectly connected to the adsorption plate (121).

One side wall (123a) of the connecting member (123) may be inserted into the inside of a rail (112) recessed in the form of a groove shape and positioned in the thickness portion of the circulation track (111), and the other side wall (123c) may be provided to surround a part of the outer side of the circulation track main body (111). One side wall (123a) and the other side wall (123c) of the connecting member (123) are connected through a connecting wall (123b), so that the connecting member (123) may have a channel shape overall. The connecting member (123) may be connected to the adsorption plate (121) through the connecting portion (123b).

A connecting roller (114) may be provided on one side wall (123a) of the connecting member (123), and the connecting roller (114) may be connected to a moving device (113) such as a wire. Therefore, upon drive of the moving device (113), the connecting roller (114) and the adsorption module (120) may move integrally.

A central axis of the connecting roller (114) may move up and down on one side wall (123a) of the connecting member (123). As one example, a slot (123d) may be formed in an up-and-down direction on one side wall (123a) of the connecting member (123), and the central axis (114a) of the connecting roller (114) may move up and down along the slot (123d). A spring (not shown) is provided inside the slot, and when one side wall (123a) of the connecting member (123) is forced downward to move, the central axis (114a) of the connecting roller (114) overcomes the elastic force of the spring and moves along the slot (123d). Then, when the force pushing the connecting member (123) downward disappears, the spring is restored, whereby the connecting member (123) may rise and return to the original position. Therefore, upon the downward movement of the adsorption module (120), the connecting member (123) moves downward integrally with the adsorption module (120). In other words, the connecting roller (123d) does not descend, and the adsorption module including the connecting member (123) descends integrally.

Through this, the connecting member (123) may move stably along the circulation track (111), and if necessary, the adsorption module (120) may move downward relative to the circulation track (111).

The connecting member (123) may be directly connected to the adsorption plate (121), but a guide plate (124) may be interposed therebetween. An elevation guide (125) may be provided between the guide plate (124) and the adsorption plate (121). The elevation guide is provided in the form of a pin, which may also be referred to as a guide pin. The elevation guide (125) is provided on both sides of the guide plate (124), whereby it may allow the adsorption plate (124) to be uniformly elevated overall without any deviation on both sides.

A roller bearing block (122) may be provided on the upper portion of both ends of the guide plate (124). The roller bearing block (122) is pressed downward by the cam (135) of the pusher module (130).

An elastically supported stopper (125) may be provided at the bottom of the roller bearing block (122). The roller bearing block (122) comprises a roller bearing (122a), whereby friction may be minimized when pressed downward. When the roller bearing block (122) is pressed downward and moves, the stopper (125) is also pressed downward and moves. Thereafter, when the roller bearing block (122) is pressed downward and moves further, the stopper (125) is no longer pressed downward. That is, in this instance, while the stopper (125) pushes the guide plate (124) downward, eventually, the adsorption plate (124) moves downward.

That is, the roller bearing block (122) is moved downward continuously by the cam (135) of the pusher module (130), but upon initial downward movement of the roller bearing block (122), only the stopper (125) moves downward and the adsorption plate (125) does not move downward. Thereafter, as the roller bearing block (122) moves further downward, the adsorption plate (125) moves downward together with the stopper (125).

The stopper (125) may be elastically supported through the spring, and the initial force pressing the roller bearing block (122) downward may be buffered through the spring.

The adsorption module (120) may comprise a position sensor (126). The position sensor (126) may be provided in each of a plurality of adsorption modules. As one example, each of the adsorption modules (120) may have a unique number. Therefore, the position sensor (126) may sense where the relevant adsorption module (120) is located.

As described above, the plurality of adsorption modules (120) moves circularly along the circulating track (110), where a specific process must be performed at a specific position. Such a specific process may comprise the downward movement of the adsorption module. Therefore, if the adsorption module is located at a general position rather than a specific position, the adsorption module may be controlled so as not to descend.

As one example, if the number of adsorption modules (120) is 20, the position sensor (126) may sense that adsorption modules No. 1 and No. 2 are positioned in the pickup region (position). Such a sensing result may be transmitted to a control part (460) to be described below, and the control part (460) may control vacuum adsorption/release with the relevant pusher module. Therefore, through the position sensors (126) individually provided in the respective adsorption modules, it may control so that the relevant process is performed only through the relevant adsorption module.

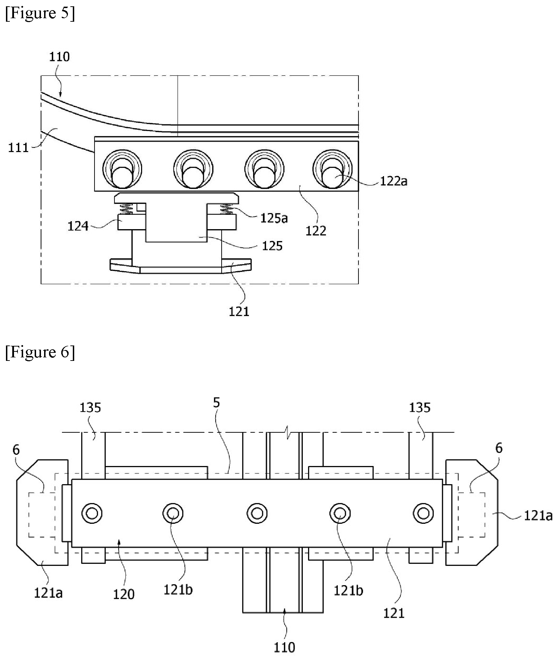

Hereinafter, a structure in which the adsorption plate (121) moves downward through the stopper (125) will be described in more detail with reference to Figure 5.

As the cam (135) rotates, the roller bearing block (122) moves downward. In this instance, the cam (135) applies not only a force pushing the roller bearing block (122) downward, but also a force pushing it in the normal direction of the rotational direction. Therefore, it is preferable that the block, which is a constitution directly receiving force through the cam (135), receives the force applied not only downward but also forward or backward by applying the roller bearing.

Specifically, when the cam (135) rotates clockwise to pressurize the roller bearing block (122), the entire roller bearing block (122) may move downward and simultaneously move forward. The roller bearing block (122) may move forward through the unshown rail structure, and return to the original position when pressurization by the cam (135) is released.

The roller bearing (122a) of the roller bearing block (122) pressurizes the stopper (125) downward while rotating. The stopper (125) may be formed in a "T" shape and may be elastically supported through the spring (125a). Upon the initial pressurization of the roller bearing block (122), only the stopper (125) moves downward, where the spring (125a) is pressurized. Thereafter, when the roller bearing block (122) further pressurizes the stopper (125) downward, the stopper (125) pressurizes the guide plate (124) downward through the spring (125a), and consequently, the adsorption plate (121) moves downward.

Therefore, the downward movement displacement of the adsorption plate (121) may be formed nonlinearly through the pressurizing structure by the cam (135) and the buffering structure by the stopper (125). As one example, the downward displacement of the adsorption plate (121) may be relatively small in the initial and final stages of pressurization and relatively large in the middle stage of pressurization. Through this, the elevation of the adsorption plate (121) may be performed stably.

Figure 6 illustrates an appearance of an adsorption plate (121) as viewed from the bottom.

The adsorption plate (121) may be formed in a rectangular shape (a shape in which a width is long and a height is short) to match the shape of the unit cell, and the transparent extension plate (121a) may be provided at both ends of the adsorption plate (121). Here, it is preferable that the width and height lengths of the adsorption plate are shorter than the width and height lengths of the unit cell. This is because it is possible to confirm that the unit cell protrudes along the perimeter of the adsorption plate (121) through the upper portion of the adsorption plate (121), so that it is possible to intuitively confirm that the adsorption and transfer of the unit cell are properly performed.

A plurality of adsorption holes (121b) may be formed on the lower surface of the adsorption plate (121), and vacuum adsorption may be performed through the adsorption holes.

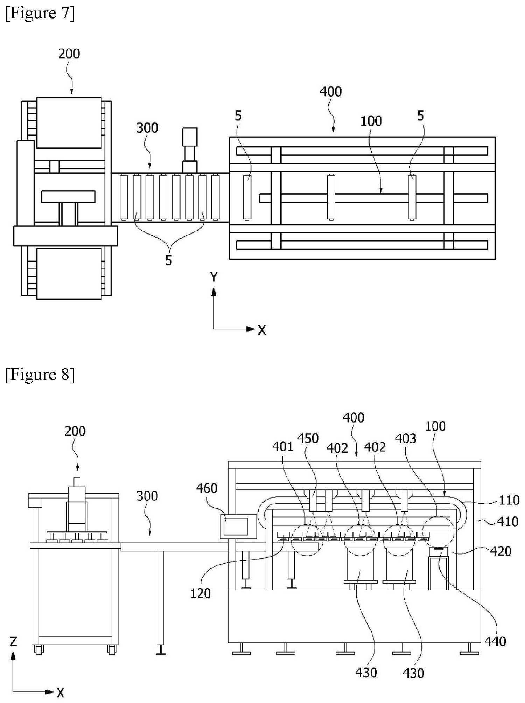

Hereinafter, a secondary battery manufacturing device to which a unit cell transfer device according to one example of the present invention is applied will be described in more detail with reference to Figures 7 and 8.

Figure 7 illustrates an appearance (lay out) of a secondary battery manufacturing device as viewed from the top, and Figure 8 illustrates an appearance (lay out) of a secondary battery manufacturing device as viewed from the front. For convenience of explanation, the length direction of the manufacturing device is referred to as the x direction, the width direction as the y direction, and the height direction as the z direction.

Here, the secondary battery manufacturing device may comprise a unit cell manufacturing device, a unit cell introduction device, and a unit cell lamination device.

The unit cell manufacturing device (200) may be referred to as a device for manufacturing a unit cell through a positive electrode, a separator, and a negative electrode. The unit cell (5) manufactured through the unit cell manufacturing device (200) may be transferred to the unit cell lamination device (400) through the unit cell introduction device (300).

The unit cell introduction device (300) may comprise a conveyor, and the unit cells (5) with a certain interval on the upper surface of the conveyor may be transferred from the unit cell manufacturing device (200) to the unit cell lamination device (400). Of course, each unit cell may be seated on each pallet, and the pallet may also be transferred through an LMS (linear movement system).

The unit cell lamination device (400) may be referred to as a device for picking up a unit cell introduced from the unit cell introduction device (300) and laminating the unit cell. The unit cell lamination device (400) may comprise the above-described unit cell transfer device (100). Here, the unit cell transfer device (100) may be referred to as a device for laminating the transferred unit cell, rather than a device for simply transferring the unit cell.

Specifically, the unit cell lamination device (400) comprises a frame (410) forming an outer shape. The unit cell transfer device (100) is provided inside the frame (410). A transfer device frame (420) supporting the unit cell transfer device (100) may be provided inside the frame (410). Then, a stacker (430) in which unit cells are laminated may be provided at the bottom of the unit cell transfer device (100).

A plurality of adsorption modules (120) may be provided on the circulation track (110) of the unit cell transfer device (100), and the adsorption modules (120) may move along the circulation track (110) in a clockwise direction. Of course, they may also move in a counterclockwise direction.

A pickup region (401), a laminating region (402), and a discharge region (403) may be preset along the lower linear section of the circulation track (110). The laminating region may be a plurality of regions, and may be preset continuously.

When the adsorption module (120) moves in the counterclockwise direction along the circulation track (110), the adsorption module may move in the order of the pickup region, the laminating region, and the discharge region along the lower linear section.

When the adsorption module (120) moves in the clockwise direction along the circulation track (110), the adsorption module may move in the order of the laminating region, the discharge region, and the pickup region along the lower linear section.

The pickup region (401) may be set closest to the unit cell introduction device (300), and the discharge region (403) may be set farthest from the unit cell introduction device (300). The laminating region (402) may be set between the pickup region (401) and the discharge region (403). Of course, the discharge region may be provided between the pickup region and the laminating region.

The unit cell introduction device (300) may be positioned to extend to the lower portion of the pickup region (401). That is, the unit cell introduction device (300) may penetrate one side of the frame (410), thereby extending to the inside of the unit cell lamination device (400).

In the pickup region (401), the adsorption module (120) adsorbs a unit cell, and then the adsorbed unit cell moves along the circulation track (100).

A stacker (430) may be provided on the lower portion of the laminating region (402). The stacker (430) may be provided with a pallet on which unit cells are laminated, and the unit cells may be laminated on the pallet. When the lamination is completed, the pallet moves in the y direction, i.e., in the width direction of the lamination device (400). The stacker (430) may be provided with a plurality of stackers.

Meanwhile, if the lamination is performed incorrectly in the laminating region (402), the unit cell may be picked up again. The adsorption module (120) adsorbing the defective unit cell may move circularly along the circulation track (110), thereby reaching the discharge region (403). A tray (440) may be provided at the bottom of the discharge region (403). Therefore, the defective unit cell discharged from the discharge region (403) may be accommodated in the tray (440).

A plurality of visions (450) may be mounted on the frame (410). The plurality of visions (450) may be provided, and may perform different functions depending on the mounting position.

As one example, the vision (450) corresponding to the pickup region (401) may perform a function of determining whether the unit cell is accurately adsorbed on the adsorption module (120). The vision (450) corresponding to the mounting region (402) may determine whether the unit cell is accurately adsorbed on the adsorption module (120), and may also perform a function of determining whether the unit cell is accurately laminated.

The secondary battery manufacturing device or the unit cell lamination device (400) may comprise a control part (460).

The control part (460) may be provided to control the transfer speed of the adsorption module (120) through the circulation track (110).

The control part (460) may control so that the adsorption module (120) moves at a certain interval or pitch, and then stops.

The control part (460) may control operation of the above-described pusher module (130). When a specific adsorption module has reached a specific position, it may control so that the relevant pusher module (130) operates.

The control part (460) may be provided to independently control the adsorption and adsorption release of multiple adsorption modules. As one example, a specific adsorption module may be made to adsorb after lowering. This may be performed in the pickup process. A specific adsorption module may be made to release adsorption after lowering. This may be performed in the laminating process.

As illustrated, according to the secondary battery manufacturing device in accordance with the present example, the manufacturing of unit cells, the introduction of unit cells, and the lamination of the unit cells may be performed continuously. Particularly, the pickup process, the laminating process, and the discharge process of the unit cells may be performed through the unit cell transfer device (100). Therefore, upon the defective lamination, the defect is immediately resolved, thereby enabling re-lamination.

According to the present example, the unit cell pickup, the unit cell lamination, and the unit cell discharge are performed while the multiple adsorption modules move circularly along the circulation track. A specific adsorption module picks up a unit cell while moving circularly along a circulation track, and then laminates the unit cell at a specific position after moving. Therefore, the specific adsorption module repeatedly performs unit cell pickup and lamination.

The pickup of the unit cell may be performed through vacuum adsorption after the adsorption module descends toward the unit cell to contact the unit cell. The lamination of the unit cell may be performed through vacuum adsorption release after the adsorption module descends in a state where it adsorbs the unit cell to contact the unit cell. That is, the ascent and descent based on the unit cell are performed in a state where it is adsorbed on the adsorption module, so that it is possible to prevent damage to the unit cell in advance during the pickup and laminating processes of the unit cell.

In addition, by dividing the circulation track into multiple sections, the pickup, discharge, and lamination can be performed simultaneously in multiple sections. Particularly, the process of picking up and discharging a unit cell with lamination failure can also be performed simultaneously with the pickup, discharge, and laminating processes, rather than a separate device or process.

### Industrial Applicability

It is described in the Detailed Description of Invention.

## Claims

1. A secondary battery unit cell transfer device comprising:
a plurality of adsorption modules adsorbing unit cells;
a circulation track on which the adsorption modules are circulated and moved;
a pusher module moving the adsorption modules downward relative to the circulation track; and
a control part releasing adsorption of the adsorption modules so that the unit cells are separated from the adsorption modules and laminated after downward movement of the adsorption modules.

2. The secondary battery unit cell transfer device according to claim 1, **characterized in that**
the control part individually controls the plurality of adsorption modules to enable adsorption and adsorption release.

3. The secondary battery unit cell transfer device according to claim 2, **characterized in that**
the circulation track is composed of an upper linear section and a lower linear section facing each other in the gravity direction, and left and right curved sections connecting the upper linear section and the lower linear section.

4. The secondary battery unit cell transfer device according to claim 2, **characterized in that**
the circulation track comprises a track-shaped main body, a rail formed on the main body, and a moving device moving along the rail.

5. The secondary battery unit cell transfer device according to claim 4, **characterized in that**
the adsorption module comprises a connecting member connected to the moving device to move integrally with the moving device.

6. The secondary battery unit cell transfer device according to claim 5, **characterized in that**
the adsorption module comprises an adsorption plate formed on a lower surface to vacuum-adsorb the upper surface of the unit cell.

7. The secondary battery unit cell transfer device according to claim 6, **characterized in that**
the adsorption plate is positioned to be further extended to both sides in the thickness plane of the main body of the circulation track.

8. The secondary battery unit cell transfer device according to claim 7, **characterized in that**
an opening penetrating the main body is formed, and the pusher module is positioned on both sides of the opening, and provided to press both sides of the adsorption module.

9. The secondary battery unit cell transfer device according to claim 6, **characterized in that**
the adsorption module comprises a transparent extension plate provided on both ends of the adsorption plate and provided to cover both ends of the unit cell.

10. The secondary battery unit cell transfer device according to claim 6, **characterized in that**
the adsorption module comprises a guide plate connected to the connecting member, and an elevating guide guiding uniform elevation of both ends of the adsorption plate is provided between the guide plate and the adsorption plate.

11. The secondary battery unit cell transfer device according to claim 2, **characterized in that**
the pusher module comprises a rotation cam, a rotation axis of the rotation cam, and a drive motor driving the rotation axis.

12. The secondary battery unit cell transfer device according to claim 11, **characterized in that**
the rotation cam is provided on both sides of the rotation axis, and provided to simultaneously press the adsorption module downward from the upper portions of both sides of the adsorption module.

13. A secondary battery manufacturing device **characterized by** comprising:
a unit cell manufacturing device for manufacturing a unit cell with a positive electrode,
a separator, and a negative electrode;
a unit cell lamination device for manufacturing an electrode assembly by laminating unit cells manufactured from the unit cell manufacturing device; and
a unit cell introduction device for transferring the unit cells manufactured from the unit cell manufacturing device to introduce them into the unit cell lamination device, wherein
the unit cell lamination device comprises:
a circulation track provided so that a plurality of adsorption modules circulates, and having a laminating region preset in a lower linear section;
a pusher module moving the adsorption module downward in the laminating region; and
a control part releasing adsorption of the adsorption modules so that the unit cells are separated from the adsorption modules and laminated after downward movement of the adsorption modules.

14. The secondary battery manufacturing device according to claim 13, **characterized in that**
the circulation track is composed of the lower linear section, an upper linear section facing the lower linear section, and left and right curved sections connecting the lower linear section and the upper linear section.

15. The secondary battery manufacturing device according to claim 14, **characterized in that**
the plurality of adsorption modules is provided to move along the circulation track while having the same interval from each other.

16. The secondary battery manufacturing device according to claim 15, **characterized in that**
a pickup region distinct from the laminating region is preset in the lower linear section of the circulation track.

17. The secondary battery manufacturing device according to claim 16, **characterized in that**
a discharge region distinct from the laminating region and the pickup region is preset in the lower linear section of the circulation track.

18. The secondary battery manufacturing device according to claim 17, **characterized in that**
the pusher module is provided with a plurality of modules, and is provided in the laminating region and the pickup region, respectively, and the unit cell introduction device is provided to extend to the pickup region of the circulation track, which is the inside of the unit cell lamination device.

19. The secondary battery manufacturing device according to claim 18, **characterized in that**
the discharge region, the laminating region, and the pickup region are preset, or the pickup region, the laminating region, and the discharge region are preset, sequentially along the movement direction of the adsorption module in the lower linear section of the circulation track.

20. A secondary battery manufacturing method, **characterized by** comprising:
an adsorption step in which an adsorption module moving along a circulation track adsorbs a unit cell at an adsorption position; and
a lamination step in which the adsorption module that has adsorbed the unit cell moves along the circulation track, thereby laminating the unit cell at a lamination position, wherein
in the lamination step, the adsorption module descends, thereby laminating the adsorbed unit cell and then releasing the adsorption, and ascends, thereby completing the lamination.
